# EUROPEAN PATENT APPLICATION

(11) **EP 4 510 257 A1**
(43) Date of publication of application: **19.02.2025**
(21) Application number: 22964837.3
(22) Date of filing: 11.11.2022
(51) Int. Cl.: H01M 10/04, H01M 50/121

(54) **BATTERY CELL, BATTERY, ELECTRIC DEVICE, AND METHOD AND APPARATUS FOR PREPARING BATTERY CELL**

(71) Applicant: Contemporary Amperex Technology Co., Limited, Ningde City, Fujian 352100 (CN)
(72) Inventor: TU, Yinhang, Ningde City, Fujian 352100 (CN); LIU, Yi, Ningde City, Fujian 352100 (CN); SONG, Shichuang, Ningde City, Fujian 352100 (CN)
(74) Representative: Kraus & Lederer PartGmbB
(86) International application number: PCT/CN2022/131319
(87) International publication number: WO 2024/098368

(57) **Abstract**

This application provides a battery cell, a battery, an electric device, and a method and a device for preparing a battery cell, and pertains to the field of battery technologies. The battery cell includes at least one electrode assembly; a housing, where the housing is configured to accommodate the at least one electrode assembly; and an insulating film configured to wrap the at least one electrode assembly, so as to isolate the at least one electrode assembly from the housing, where the insulating film is sleeve-shaped and a material of the insulating film is a hot shrinkable material. The technical solutions of this application can improve the pass rate of the battery cell.

## Description

### TECHNICAL FIELD

This application relates to the field of battery technologies, and in particular to, a battery cell, a battery, an electric device, and a method and a device for preparing a battery cell.

### BACKGROUND

As environmental pollution worsens, the new energy industry is receiving increasing attention. Secondary batteries serve as vital components of many electronic products, energy storage products, and electric vehicles, and their performance directly affects the promotion and adoption of related products.

In the preparation procedure of a battery cell, the prepared electrode assembly needs to be packaged into a metal housing for assembly. For insulation between the electrode assembly and the housing, the outer surface of the electrode assembly typically needs to be wrapped with an insulating film. However, the existing process of wrapping with the insulating film is complex and has a high defective rate, which is not conducive to improving the pass rate of the battery cell. Therefore, how a battery cell including an insulating film is provided to improve the pass rate of the battery cell has become a technical problem to be resolved urgently.

### SUMMARY

This application provides a battery cell, a battery, an electric device, and a method and a device for preparing a battery cell, which can improve the pass rate of the battery cell.

According to a first aspect, this application provides a battery cell including: at least one electrode assembly; a housing, where the housing is configured to accommodate at least one electrode assembly; and an insulating film configured to wrap the at least one electrode assembly, so as to isolate the at least one electrode assembly from the housing, where the insulating film is sleeve-shaped and a material of the insulating film is a hot shrinkable material.

An embodiment of this application provides a battery cell including at least one electrode assembly, a housing, and an insulating film. The at least one electrode assembly is accommodated in the housing, and the insulating film is configured to wrap the at least one electrode assembly, so as to isolate the at least one electrode assembly from the housing. This can achieve isolation between the at least one electrode assembly and the housing. As the insulating film is sleeve-shaped and the material of the insulating film is the hot shrinkable material, the sleeve-shaped insulating film can sleeve the at least one electrode assembly and be heated to shrink, so as to wrap the at least one electrode assembly. This can alleviate the problem that an excessively small or large distance between the insulating film and an end cover causes a decrease in the pass rate of the battery cell and can also alleviate the problem that poor hot melting causes a decrease of the pass rate of the battery cell. Therefore, the technical solutions of this application can improve the pass rate of the battery cell.

In a possible embodiment, the insulating film has a first opening, and the first opening corresponds to an end of the at least one electrode assembly provided with a tab. This is conducive to sleeving the at least one electrode assembly with the insulating film via the first opening and exposing the tab via the first opening for connection between the tab and another conductive part.

In a possible embodiment, the insulating film is provided with a bottom supporting plate on a first surface opposite the first opening on a side away from the at least one electrode assembly. This can avoid abrasion between the first surface of the insulating film and the housing and enhance the support of the insulating film for the at least one electrode assembly.

In a possible embodiment, the bottom supporting plate is adhered to the insulating film. Thus, the bottom supporting plate being adhered to the insulating film can enhance connection strength between the bottom supporting plate and the insulating film.

In a possible embodiment, the insulating film is configured, after connected to the bottom supporting plate, to wrap the at least one electrode assembly. Thus, the bottom supporting plate and the insulating film, as a whole, wrap the at least one electrode assembly, which is conducive to enhancing the strength of the insulating film, further ensuring that the insulating film isolates the at least one electrode assembly from the housing.

In a possible embodiment, a material of the bottom supporting plate includes an insulating material. This can further ensure insulation between the at least one electrode assembly and housing.

In a possible embodiment, the shape of the insulating film is consistent with the overall shape of the at least one electrode assembly. This is conducive to attachment of the insulating film to the at least one electrode assembly.

In a possible embodiment, the insulating film is attached to the at least one electrode assembly. After hot shrinkage, the insulating film is attached to the at least one electrode assembly, thus wrapping the electrode assembly, so as to reduce the risks such as poor adhesion.

In a possible embodiment, in at least one direction, a size of the insulating film decreases by 1 mm-10 mm after hot shrinkage. This is conducive to sleeving the at least one electrode assembly with the insulating film and can achieve attachment of the insulating film after hot shrinkage to the at least one electrode assembly.

In a possible embodiment, a material of the insulating film includes at least one of polyethylene, polystyrene, polyvinyl chloride, polypropylene, polymethyl methacrylate, methyl phenyl silicone resin, and polyethylene terephthalate. This is conducive to flexibly selecting an insulating film of a corresponding material based on actual requirements.

According to a second aspect, this application provides a battery, including the battery cell according to the first aspect and any one of the possible embodiments of the first aspect.

According to a third aspect, this application provides an electric device including the battery according to the second aspect, where the battery is configured to provide electric energy for the electric device.

According to a fourth aspect, this application provides a method for preparing a battery cell, including: providing at least one electrode assembly; providing an insulating film, where the insulating film is sleeve-shaped and a material of the insulating film is a hot shrinkable material; sleeving the at least one electrode assembly with the insulating film; and heating the insulating film, allowing the insulating film to wrap the at least one electrode assembly. The technical solutions in this application can alleviate the problem that an excessively small or large distance between the insulating film and an end cover causes a decrease in the pass rate of the battery cell and can also alleviate the problem that poor hot melting causes a decrease of the pass rate of the battery cell.

In a possible embodiment, the insulating film has a first opening, and the first opening corresponds to an end of the at least one electrode assembly provided with a tab. This is conducive to sleeving the at least one electrode assembly with the insulating film via the first opening and exposing the tab via the first opening for connection between the tab and another conductive part.

In a possible embodiment, before the sleeving the at least one electrode assembly with the insulating film, the method further includes: providing a bottom supporting plate; and disposing the bottom supporting plate on a first surface of the insulating film opposite the first opening on a side away from the at least one electrode assembly. This can avoid abrasion between the first surface of the insulating film and the housing and enhance the support of the insulating film for the at least one electrode assembly.

In a possible embodiment, after the heating the insulating film, allowing the insulating film to wrap the at least one electrode assembly, the method further includes: identifying appearance of the at least one electrode assembly wrapped with the insulating film; and determining, based on the appearance of the at least one electrode assembly, whether to accommodate the at least one electrode assembly wrapped with the insulating film in the housing. In this way, whether the insulating film wraps the at least one electrode assembly well can be determined based on the appearance of the at least one electrode assembly, thus determining whether to place the at least one electrode assembly in the housing so as to finish the assembly of the battery cell.

In a possible embodiment, the determining, based on the appearance of the at least one electrode assembly, whether to accommodate the at least one electrode assembly wrapped with the insulating film in the housing includes: under a condition that the appearance of the at least one electrode assembly is normal, accommodating the at least one electrode assembly wrapped with the insulating film in the housing. This can ensure that the insulating film can wrap the at least one electrode assembly well, thus ensuring isolation of the at least one electrode assembly from the housing.

According to a fifth aspect, this application provides a device for preparing a battery cell, including: a providing module configured to provide at least one electrode assembly and an insulating film, where the insulating film is sleeve-shaped and a material of the insulating film is a hot shrinkable material; and a mounting module configured to sleeve the at least one electrode assembly with the insulating film and heat the insulating film, allowing the insulating film to wrap the at least one electrode assembly.

The embodiments of this application provide a battery cell including at least one electrode assembly, a housing, and an insulating film. The at least one electrode assembly is accommodated in the housing, and the insulating film is configured to wrap the at least one electrode assembly, so as to isolate the at least one electrode assembly from the housing. This can achieve isolation between the at least one electrode assembly and the housing. As the insulating film is sleeve-shaped and the material of the insulating film is the hot shrinkable material, the sleeve-shaped insulating film can sleeve the at least one electrode assembly and be heated to shrink, so as to wrap the at least one electrode assembly. This can alleviate the problem that an excessively small or large distance between the insulating film and an end cover causes a decrease in the pass rate of the battery cell and can also alleviate the problem that poor hot melting causes a decrease of the pass rate of the battery cell. Therefore, the technical solutions of this application can improve the pass rate of the battery cell.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery cell according to an embodiment of this application;
FIG. 4 is a schematic exploded view of a battery cell according to an embodiment of this application;
FIG. 5 is a schematic structural diagram of an insulating film in the related art;
FIG. 6 is a schematic structural diagram of an electrode assembly wrapped with an insulating film in the related art;
FIG. 7 is a schematic structural diagram of an insulating film according to an embodiment of this application;
FIG. 8 is a schematic structural diagram of an electrode assembly provided with an end cover according to an embodiment of this application;
FIG. 9 is a schematic structural diagram of a bottom supporting plate according to an embodiment of this application;
FIG. 10 is a top view of an insulating film provided with a bottom supporting plate according to an embodiment of this application;
FIG. 11 is a schematic structural diagram of an electrode assembly wrapped with an insulating film according to an embodiment of this application;
FIG. 12 is a schematic flowchart of a method for preparing a battery cell according to an embodiment of this application; and
FIG. 13 is a schematic diagram of a device for preparing a battery cell according to an embodiment of this application.
In the accompanying drawings, the accompanying drawings are not necessarily drawn to scale.

### DESCRIPTION OF EMBODIMENTS

The following further describes implementations of this application in detail with reference to the accompanying drawings and embodiments. The detailed description of the embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not strictly perpendicular, but within the allowable range of error. "Parallel" is not strictly parallel, but within the allowable range of error.

The orientation terms appearing in the following description all are directions shown in the figures, and do not limit the specific structure of the application. In the descriptions of this application, it should be further noted that unless otherwise specified and defined explicitly, the terms "installation", "link", and "connection" should be understood in their general senses. For example, the terms may be a fixed connection, a detachable connection, or an integrated connection, or may be a direct connection, or an indirect connection through an intermediate medium. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In this application, the battery cell may include a primary battery or a secondary battery, or may include a lithium-ion battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either.

The battery mentioned in the embodiments of this application is a single physical module that includes one or more battery cells for providing a higher voltage and capacity. For example, the battery mentioned in this application may include a battery pack or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate and a negative electrode plate. The battery cell mainly relies on movement of metal ions between a positive electrode plate and a negative electrode plate to work. The positive electrode plate includes a positive electrode current collector and a positive electrode active substance layer. The positive electrode active substance layer is applied on a surface of the positive electrode current collector. A current collector uncoated with the positive electrode active substance layer bulges out of a current collector coated with the positive electrode active substance layer, and the current collector uncoated with the positive electrode active substance layer is used as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is coated on a surface of the negative electrode current collector. A current collector uncoated with the negative electrode active substance layer protrudes from the current collector coated with the negative electrode active substance layer and serves as a negative tab. The negative electrode current collector may be made of copper, and the negative electrode active substance may be carbon, silicon, or the like. In order to guarantee that no fusing occurs when a large current passes, there are multiple positive tabs that are stacked together, and there are multiple negative tabs that are stacked together. In addition, the electrode assembly may be a wound structure or a stacked structure. However, the embodiments of this application are not limited thereto.

To meet different power requirements, the battery may include multiple battery cells, and the multiple battery cells may be connected in series, parallel, or series-parallel, where being connected in series-parallel means a combination of series and parallel connections. Optionally, multiple battery cells may be connected in series, parallel, or series-parallel to form a battery module first, and then multiple battery modules are connected in series, parallel, or series-parallel to form a battery. In a word, the multiple battery cells may be directly combined into a battery, or may first be combined into battery modules that are then combined into a battery. The battery is further provided in an electric device to supply electrical energy to the electric device.

With the development of battery technology, various requirements for performance of the battery become increasingly high. The requirements for the preparation process and the pass rate of the battery cell also become increasingly high. In the preparation procedure of the battery cell, the prepared electrode assembly needs to be packaged into a metal housing for assembly. To ensure insulation between the electrode assembly and the housing, the outer surface of the electrode assembly typically needs to be wrapped with an insulating film.

The applicant has found through research that the existing process of wrapping with the insulating film is complex and has a high defective rate. In the existing process of wrapping with the insulating film, a sheet-shaped insulating film is typically used to coat a corresponding surface of the electrode assembly, and a preset distance is reserved at one end of the insulating film corresponding to the end cover, to enable the insulating film to be connected to lower plastic of the end cover. During practical production, an actual distance between the insulating film and the end cover is typically greater than or less than a preset distance, causing poor welding between the end cover and the housing or poor hot melting between the insulating film and the end cover, thus resulting in product rework or scrapping, which is not conducive to increasing the pass rate of the battery cell.

Based on this, this application provides a battery cell, where an insulating film wrapping an electrode assembly in the battery cell is designed to be sleeve-shaped and is made of a hot shrinkable material. In this way, in the process of wrapping the electrode assembly with the insulating film, it is only necessary to sleeve the electrode assembly with the insulating film and heat the insulating film to wrap the electrode assembly. The technical solutions in this application can alleviate the problem that an excessively small or large distance between the insulating film and an end cover causes a decrease in the pass rate of the battery cell and can also alleviate the problem that poor hot melting causes a decrease of the pass rate of the battery cell.

The technical solutions described in the embodiments of this application are applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of this application are not only applicable to the devices described above, but also applicable to all devices using batteries. However, for brevity of description, in the following embodiments, the electric vehicle is used as an example for description.

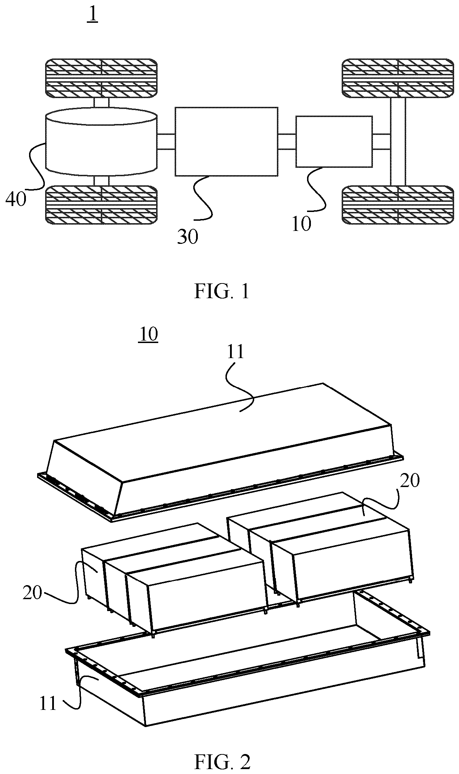

For example, FIG. 1 is a schematic structural diagram of a vehicle 1 according to an embodiment of this application. The vehicle 1 may be a fuel vehicle, a gas vehicle, or a new energy vehicle, and the new energy vehicle may be a battery electric vehicle, a hybrid electric vehicle, an extended range electric vehicle, or the like. A motor 40, a controller 30, and a battery 10 may be provided inside the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different requirements for power use, the battery 10 may include multiple battery cells. For example, FIG. 2 is a schematic structural diagram of a battery 10 according to an embodiment of this application. The battery 10 may include multiple battery cells 20. The battery 10 may further include a box 11. Inside of the box 11 is a hollow structure. The multiple battery cells 20 are accommodated in the box 11. For example, the multiple battery cells 20 are connected in parallel or in series or in parallel and series, and then placed into the box 11.

Optionally, the battery 10 may further include other structures. Details are not described herein. For example, the battery 10 may further include a busbar, where the busbar is configured to implement an electrical connection among multiple battery cells 20, for example, a parallel connection, a series connection, or a series-parallel connection. Specifically, the busbar may implement the electrical connection among the battery cells 20 by connecting electrode terminals of the battery cells 20. Further, the busbar may be fixed to the electrode terminal of the battery cell 20 by welding. Electrical energy of the multiple battery cells 20 may be further led out through a conductive mechanism that passes through the box 11. Optionally, the conductive mechanism may also belong to the busbar.

Based on different power demands, battery cells 20 can be set in any quantity. The multiple battery cells 20 may be connected in series, in parallel, or in series and parallel to achieve greater capacity or power. Because the quantity of battery cells 20 included in each battery 10 may be large, for ease of installation, the battery cells 20 may be arranged in groups, and each group of battery cells 20 forms a battery module. The quantity of battery cells 20 included in the battery module is not limited, and may be set according to requirements. A battery may include multiple battery modules. These battery modules may be connected in series, parallel, or series-parallel.

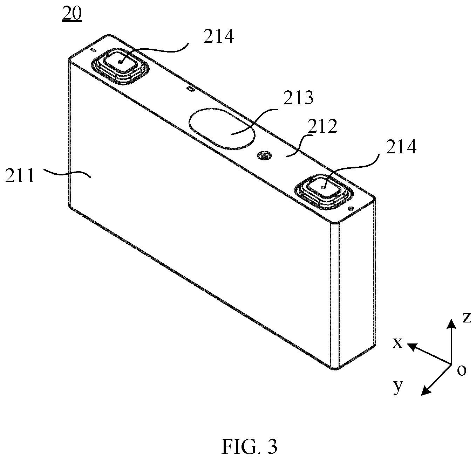

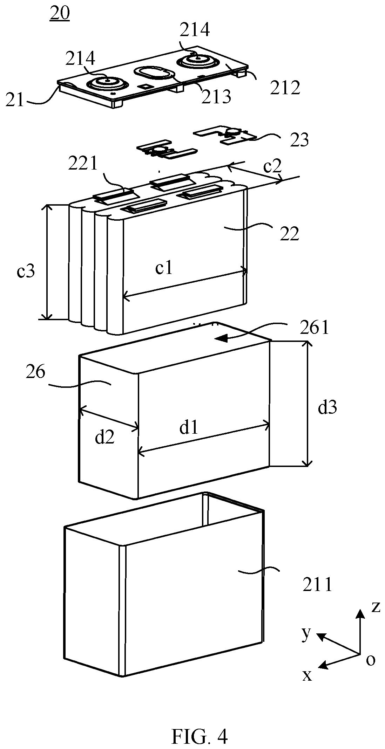

FIG. 3 is a schematic structural diagram of a battery cell according to an embodiment of this application; and FIG. 4 is a schematic exploded view of a battery cell according to an embodiment of this application. In an embodiment of this application, as shown in FIGs. 3 and 4, the battery cell 20 includes at least one electrode assembly 22, a housing 211, and an insulating film 26.

The battery cell 20 includes the at least one electrode assembly 22. For example, as shown in FIG. 4, the battery cell 20 includes four electrode assemblies 22.

The housing 211 is configured to accommodate the at least one electrode assembly 22. For example, as shown in FIG. 4, the housing 211 is used for accommodating four electrode assemblies 22. In other words, all the electrode assemblies 22 are accommodated in the housing 211.

The housing 211 is determined based on a combined shape of the at least one electrode assembly 22. For example, the housing 211 may be a hollow cuboid, a cube, or a cylinder, and one surface of the housing 211 has an opening for placing the one or more electrode assemblies 22 into the housing 211. For example, when the housing 211 is a hollow cuboid or cube, one surface of the housing 211 is an opening surface, which means that the surface has no wall so that the inside and the outside of the housing 211 are communicated. When the housing 211 is a hollow cylinder, the end surface of the housing 211 is an opening surface, which means that the end surface has no wall so that the inside and the outside of the housing 211 are communicated.

Optionally, the housing 211 is an aluminum or steel housing.

The battery cell 20 may further include an end cover 212, and the end cover 212 covers an opening of the housing 211 and is connected to the housing 211, so as to form an enclosed chamber for placing the electrode assembly 22. The housing 211 is filled with an electrolyte such as a liquid electrolyte.

The insulating film 26 is configured to wrap the at least one electrode assembly 22, so as to isolate the at least one electrode assembly 22 from the housing 211. For example, as shown in FIG. 4, the battery cell 20 includes four electrode assemblies 22, and the insulating film 26 is used to wrap the four electrode assemblies 22, to isolate the four electrode assemblies 22 from the housing 211. This allows the insulating film 26 to isolate all the electrode assemblies 22 from the housing 211.

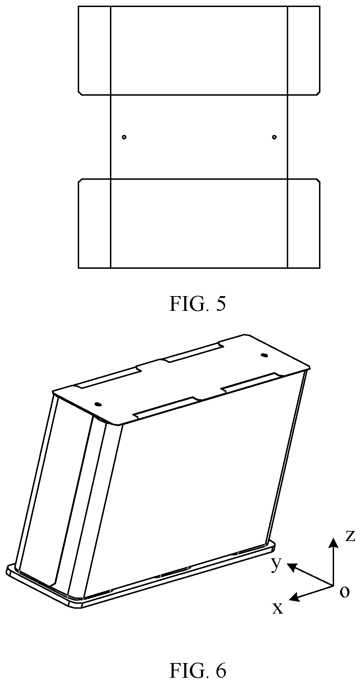

FIG. 5 is a schematic structural diagram of an insulating film in the related art, and FIG. 6 is a schematic structural diagram of an electrode assembly wrapped with an insulating film in the related art. As shown in FIGs. 5 and 6, the insulating film in the related art is typically sheet-shaped. In the related art, the sheet-shaped insulating film is typically used to wrap the surface of the electrode assembly, and after wrapping, at least some regions of the insulating film overlap each other. After wrapping with the insulating film, the insulating film is hot melted to be connected to the end cover.

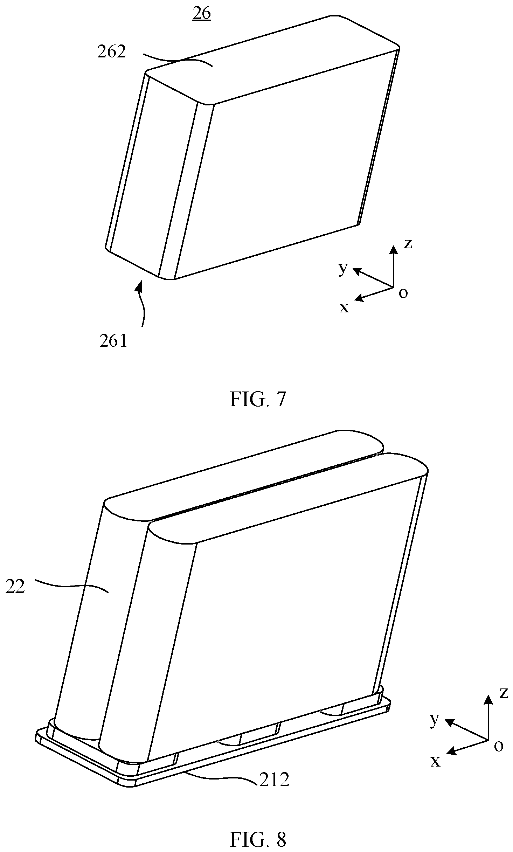

FIG. 7 is a schematic structural diagram of an insulating film according to an embodiment of this application; and FIG. 8 is a schematic structural diagram of an electrode assembly provided with an end cover according to an embodiment of this application. It should be noted that FIG. 8 only illustratively shows two electrode assemblies 22, and the number of the electrode assemblies 22 is not particularly limited in the embodiments of this application.

Referring to FIGs. 7 and 8, the insulating film 26 is sleeve-shaped and a material of the insulating film 26 is a hot shrinkable material.

The insulating film 26 is sleeve-shaped, meaning that the insulating film 26 sleeves the outside of the at least one electrode assembly 22 and the insulating film 26 is a tube-like structure. Specifically, the insulating film 26 may be a cuboid-shaped sleeve tube, a cylinder-shaped sleeve tube, or a sleeve tube in another shape, provided that the at least one electrode assembly 22 can be sleeved with it.

The insulating film 26 is a hot shrinkable material, meaning that after heated, the insulating film 26 shrinks. The level of shrinking of the insulating film 26 is related to the specific material and the heating condition of the insulating film 26, which may be specifically configured based on an actual condition.

In the process of using the insulating film 26 to coat the electrode assemblies 22, all the electrode assemblies 22 can be sleeved with the insulating film 26 without the need to coat the outer surfaces of the electrode assemblies 22 one by one using the sheet-shaped insulating film, which is conducive to reducing the complexity of the process. In addition, because the insulating film 26 is a hot shrinkable material, the insulating film 26 can be heated to wrap all the electrode assemblies 22. Instead of the hot melting process for wrapping the insulating film 26 around the electrode assembly 22, this application uses the hot shrinking process, which can alleviate the phenomenon of drawing or a broken insulating film 26 during hot melting. In addition, this process can also alleviate the problem that an excessively small distance between the insulating film 26 and the end cover 212 along the thickness direction of the end cover 212 causes burn-through during welding of the end cover 212 with the housing 211 and can also alleviate a problem that an excessively large distance between the insulating film 26 and the end cover 212 along the thickness direction of the end cover 212 causes poor hot melting between the insulating film 26 and the end cover 212.

Optionally, as shown in FIG. 8, before the electrode assembly 22 is wrapped with the insulating film 26, the electrode assembly 22 is connected to the end cover 212. For example, the electrode assembly 22 is connected to the lower plastic of the end cover 212, which may mean that the electrode assembly 22 is connected to the lower plastic of the end cover 212 via a middle member.

The embodiments of this application provide a battery cell 20 including at least one electrode assembly 22, a housing 211, and an insulating film 26. The at least one electrode assembly 22 is accommodated in the housing 211, and the insulating film 26 is configured to wrap the at least one electrode assembly 22, so as to isolate the at least one electrode assembly 22 from the housing 211. This can achieve isolation between the at least one electrode assembly 22 and the housing 211. As the insulating film 26 is sleeve-shaped and the material of the insulating film 26 is the hot shrinkable material, the sleeve-shaped insulating film 26 can sleeve the at least one electrode assembly 22 and be heated to shrink, so as to wrap the at least one electrode assembly 22. Compared with the method where the sheet-shaped insulating film is used to coat the at least one electrode assembly and then the insulating film is connected to the end cover of the battery cell through hot melting, the technical solutions in this application can alleviate the problem that an excessively small or large distance between the insulating film 26 and an end cover 212 causes a decrease in the pass rate of the battery cell 20 and can also alleviate the problem that poor hot melting causes a decrease of the pass rate of the battery cell 20. Therefore, the technical solutions of this application can improve the pass rate of the battery cell.

In some embodiments, the insulating film 26 has a first opening 261, and the first opening 261 corresponds to an end of the at least one electrode assembly 22 provided with a tab 221.

Optionally, the battery cell 20 includes a connection member 23. In this way, the tab 221 of the electrode assembly 22 can be connected to an electrode terminal 214 on the end cover 212 via the connection member 23.

In some embodiments, with the arrangement of the first opening 261, the at least one electrode assembly 22 can be sleeved with the insulating film 26 via the first opening 261 and the tab 221 can be exposed via the first opening 261 for connection between the tab 221 and another conductive part, such as the connection member 23.

The insulating film 26 has the first opening 261, which may be that a surface of the insulating film 26 is an opening surface. In this way, the electrode assembly 22 can be sleeved with the insulating film 26 via the first opening 261.

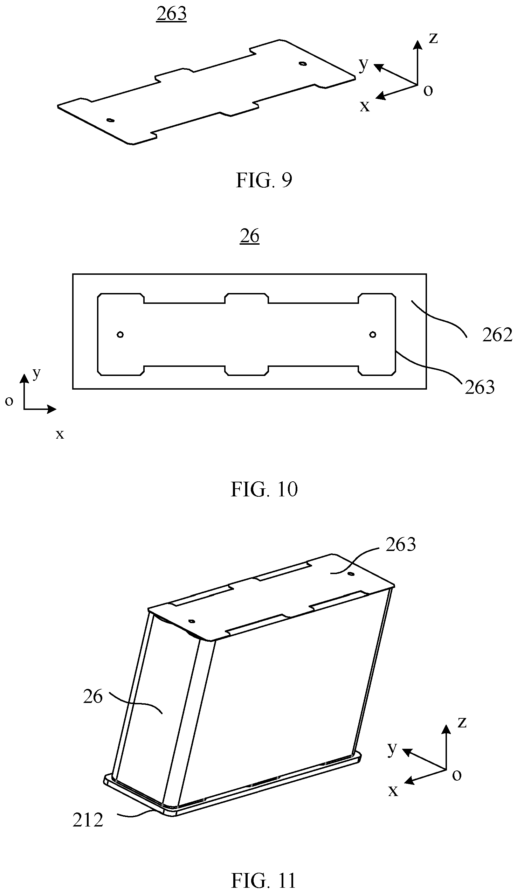

FIG. 9 is a schematic structural diagram of a bottom supporting plate according to an embodiment of this application, and FIG. 10 is a top view of an insulating film provided with a bottom supporting plate according to an embodiment of this application. In some embodiments, referring to FIGs. 7, 9, and 10, the insulating film 26 is provided with a bottom supporting plate 263 on a first surface 262 opposite the first opening 261 on a side away from the at least one electrode assembly 22.

The first surface 262 of the insulating film 26 is opposite the first opening 261 along a direction z, and a side of the first surface 262 away from the electrode assembly 22 is provided with a bottom supporting plate 263. In other words, along the direction z or the thickness direction of the bottom supporting plate 263, the bottom supporting plate 263 is disposed between the housing 211 and the first surface 262 of the insulating film 26.

Optionally, the bottom supporting plate 263 and the first surface 262 have the same area.

Optionally, the area of the bottom supporting plate 263 is smaller than the area of the first surface 262. This is conducive to attaching the bottom supporting plate 263 to the first surface 262 of the insulating film 26.

Optionally, the shape of the bottom supporting plate 263 may be rectangular, oval, or other polygons and can be arranged specifically based on an actual condition. This is not limited specifically in this application.

In some embodiments, the bottom supporting plate 263 is disposed between the housing 211 and the first surface 262 of the insulating film 26. This can avoid abrasion between the first surface 262 of the insulating film 26 and the housing 211 and enhance the support of the insulating film 26 for the at least one electrode assembly 22. This is also conducive to attaching the bottom supporting plate 263 to the insulating film 26, for example, to adhering the bottom supporting plate 263 to the first surface 262 of the insulating film 26.

In some embodiments, the bottom supporting plate 263 is adhered to the insulating film 26.

Optionally, the bottom supporting plate 263 is made of an adhesive material.

Optionally, one surface of the bottom supporting plate 263 in contact with the first surface 262 of the insulating film 26 is provided with an adhesive, thus achieving adhesion between the bottom supporting plate 263 and the first surface 262 of the insulating film 26.

In some embodiments, the bottom supporting plate 263 is adhered to the insulating film 26, which can enhance the connection strength between the bottom supporting plate 263 and the insulating film 26.

Optionally, two opposite surfaces of the bottom supporting plate 263 along the thickness direction are provided with adhesives.

FIG. 11 is a schematic structural diagram of an electrode assembly wrapped with an insulating film according to an embodiment of this application. As shown in FIG. 11, the electrode assembly 22 is coated with the insulating film 26 provided with the bottom supporting plate 263.

In some embodiments, the insulating film 26 is configured, after connected to the bottom supporting plate 263, to wrap at least one electrode assembly 22. Thus, the bottom supporting plate 263 and the insulating film 26, as a whole, wrap the at least one electrode assembly 22, which is conducive to enhancing the strength of the insulating film 26, further ensuring that the insulating film 26 isolates the at least one electrode assembly 22 from the housing 211.

Optionally, the bottom supporting plate 263 is made of a hot shrinkable material. This is conducive to hot shrinking the bottom supporting plate 263 and the insulating film 26 as a whole and wrapping the at least one electrode assembly 22.

Optionally, the bottom supporting plate 263 may be connected to the insulating film 26 after hot shrinkage of the insulating film 26. This is conducive to attaching the bottom supporting plate 263 to the insulating film 26.

In some embodiments, a material of the bottom supporting plate 263 includes an insulating material. This can further ensure insulation between the at least one electrode assembly 22 and housing 211.

Optionally, a material of the bottom supporting plate 263 is plastic or rubber.

In some embodiments, the shape of the insulating film 26 is consistent with the overall shape of the at least one electrode assembly 22.

The overall shape of the at least one electrode assembly 22 is a shape of the at least one electrode assembly 22 combined. The shape of the insulating film 26 is consistent with the overall shape of the at least one electrode assembly 22, meaning that the shape of the insulating film 26 is similar to or substantially consistent with a contour of all the electrode assemblies 22 combined. For example, if the shape of the at least one electrode assembly 22 combined is a cylinder, the insulating film 26 is cylindrical with the middle being hollow. If the shape of the at least one electrode assembly 22 combined is a cuboid, the insulating film 26 is cuboid with the middle being hollow.

In some embodiments, the shape of the insulating film 26 is consistent with the overall shape of the at least one electrode assembly 22, which is conducive to attaching the insulating film 26 to the at least one electrode assembly 22.

In some embodiments, the insulating film 26 is attached to the at least one electrode assembly 22.

As the insulating film 26 is attached to the at least one electrode assembly 22, the insulating film 26 can wrap the electrode assembly 22 without the need to tightly attach the insulating film 26 to the at least one electrode assembly 22 by means of attaching a blue film tape. This can reduce the risks such as poor adhesion.

The insulating film 26 is attached to the at least one electrode assembly 22, which may mean that after hot shrinkage, the insulating film 26 is attached to the at least one electrode assembly 22.

Before hot shrinkage, the volume of the accommodating space of the insulating film 26 is larger than the volume of the at least one electrode assembly 22, which is conducive to sleeving the at least one electrode assembly 22 with the insulating film 26.

The insulating film 26 after hot shrinkage is attached to the at least one electrode assembly 22, which may mean that the insulating film 26 after hot shrinkage is attached to or tightly attached to all the electrode assemblies 22. For example, as shown in FIG. 4, after hot shrinkage, along a direction z, the length of the insulating film 26 may be slightly less than or greater than the length of the electrode assembly 22. In other words, since the insulating film 26 is attached to or tightly attached to all the electrode assemblies 22 without the need to connect the insulating film 26 and the end cover 212 through hot melting, the requirement for the distance between the insulating film 26 and the end cover 212 along the thickness direction of the end cover 212 is lowered, thus reducing the difficulty of coating with the insulating film 26.

In some embodiments, at least one direction, a size of the insulating film 26 after hot shrinkage decreases by 1 mm-10 mm, for example, 2 mm, 3 mm, 4 mm, 5 mm, 8 mm, or 10 mm. In other words, before hot shrinkage, the size of the insulating film 26 is larger than the size of the at least one electrode assembly 22 by 1 mm-10 mm.

For example, as for the cuboid-shaped insulating film 26, in at least one of the length direction, the width direction, and the height direction, the size of the insulating film 26 is larger than the overall size of the at least one electrode assembly 22 by 1 mm-10 mm. For example, the length direction may be a direction x, the width direction is a direction y, and the height direction is a direction z. A size of the insulating film 26 is d1 in the direction x, d2 in the direction y, and d3 in the direction z; and a size of the at least one electrode assembly 22 is c1 in the direction x, c2 in the direction y, and c3 in the direction z. To be specific, at least one of a difference between d1 and c1, a difference between d2 and c2, and a difference between d3 and c3 is 1 mm-10 mm.

Under a condition that before hot shrinkage, the size of the accommodating space of the insulating film 26 is smaller than the size of the at least one electrode assembly 22 by 1 mm in at least one direction, it is not conducive to sleeving the at least one electrode assembly 22 with the insulating film 26.

Under a condition that before hot shrinkage, the size of the accommodating space of the insulating film 26 is larger than the size of the at least one electrode assembly 22 by 10 mm in at least one direction, it is conducive to sleeving the at least one electrode assembly 22 with the insulating film 26, but not conducive to attaching the insulating film 26 after hot shrinkage to the at least one electrode assembly 22.

The size of the accommodating space of the insulating film 26 before hot shrinkage is arranged to be larger than the size of the at least one electrode assembly 22 by 1 mm-10 mm in at least one direction. This is conducive to sleeving the at least one electrode assembly 22 with the insulating film 26 and can achieve attachment of the insulating film 26 after hot shrinkage to the at least one electrode assembly 22.

Optionally, in at least one direction, the size of the insulating film 26 before hot shrinkage is larger than the size of the at least one electrode assembly 22 by 3 mm-5 mm.

In some embodiments, a material of the insulating film 26 includes at least one of polyethylene, polystyrene, polyvinyl chloride, polypropylene, polymethyl methacrylate, methyl phenyl silicone resin, and polyethylene terephthalate. This is conducive to flexibly selecting an insulating film of a corresponding material based on actual requirements.

It should be understood that relevant parts in various embodiments of this application can refer to each other, and for the sake of brevity, are not reiterated herein.

This application provides a battery 10 including the battery cell 20 in the foregoing embodiment.

This application provides an electric device including the battery 10 in the foregoing description, where the battery 10 is configured to provide electric energy for the electric device. Optionally, the electric device may be a vehicle 1, ship, spacecraft, or the like, which is not limited in this embodiment of this application.

The battery cell 20, the battery 10, and the electric device in the embodiments of this application are described above, and a method and device for manufacturing a battery cell in the embodiments of this application are described below. For content that is not described in detail, refer to the foregoing embodiments.

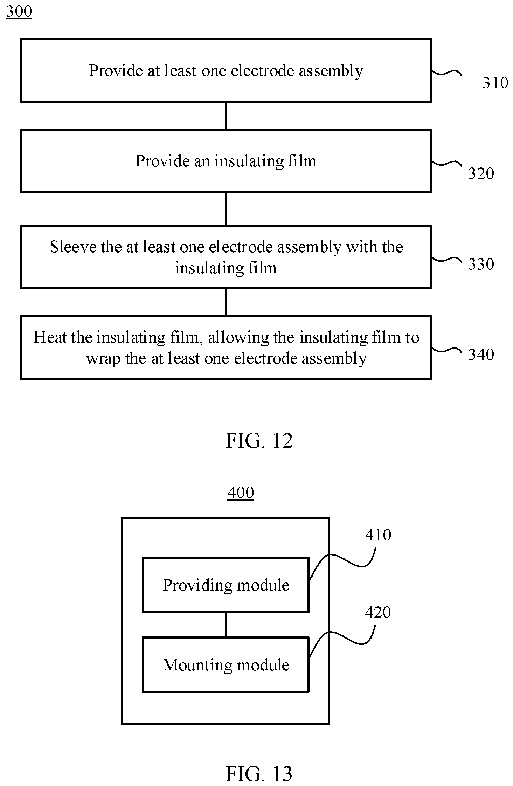

FIG. 12 is a schematic flowchart of a method for preparing a battery cell according to an embodiment of this application. As shown in FIG. 12, a method 300 includes the following steps:
Step 310: Provide at least one electrode assembly 22.

Optionally, in step 310, the electrode assembly 22 has been connected to the end cover 212. For example, the tab 221 of the electrode assembly 22 is connected to an electrode terminal 214 of the end cover 212 via the connection member 23. The electrode assembly 22 may alternatively be connected the end cover 212 via another part.

Step 320: Provide an insulating film 26, where the insulating film 26 is sleeve-shaped and a material of the insulating film 26 is a hot shrinkable material.

Step 330: Sleeve the at least one electrode assembly 22 with the insulating film 26.

Optionally, in step 330, the position of the electrode assembly 22 is fixed, and the insulating film 26 is moved to sleeve the at least one electrode assembly 22, such that the electrode assembly 22 is accommodated in the accommodating space formed by the insulating film 26.

Optionally, after sleeving is performed with the insulating film 26, a distance between the first opening 261 of the insulating film and the end cover 212 is in a preset range.

Step 340: Heat the insulating film 26, allowing the insulating film 26 to wrap the at least one electrode assembly 22.

Optionally, in step 340, the insulating film 26 is heated by blowing hot air. The temperature and blowing time of the hot air may be specifically set based on a material of the insulating film 26.

Optionally, each portion of the insulating film 36 is uniformly blown with hot air, making it to hot shrink uniformly.

Optionally, after step 340, the method 300 further includes accommodating the at least one electrode assembly 22 wrapped with the insulating film 26 in the housing 211.

Optionally, after the at least one electrode assembly 22 wrapped with the insulating film 26 is accommodated in the housing 211, the housing 211 is welded to the end cover 212.

In the method 300, compared with the method where the sheet-shaped insulating film is used to coat the at least one electrode assembly 22 and then the insulating film is connected to the end cover 212 of the battery cell 20 through hot melting, the technical solutions in this application can alleviate the problem that an excessively small or large distance between the insulating film 26 and an end cover 212 causes a decrease in the pass rate of the battery cell 20 and can also alleviate the problem that poor hot melting causes a decrease of the pass rate of the battery cell 20.

In some embodiments, the insulating film 26 has a first opening 261, and the first opening 261 corresponds to an end of the at least one electrode assembly 22 provided with a tab 221.

This is conducive to sleeving the at least one electrode assembly 22 with the insulating film 26 via the first opening 261 and exposing the tab 221 via the first opening 261 for connection between the tab 221 and another conductive part.

In some embodiments, before step 330, the method 300 further includes: providing a bottom supporting plate 263; and disposing the bottom supporting plate 263 on a first surface 262 of the insulating film 26 opposite the first opening 261 on a side away from the at least one electrode assembly 22.

This can avoid abrasion between the first surface 262 of the insulating film 26 and the housing 211 and enhance the support of the insulating film 26 for the at least one electrode assembly 22.

In some embodiments, after step 340, the method 300 further includes: identifying appearance of the at least one electrode assembly 22 wrapped with the insulating film 26; and determining, based on the appearance of the at least one electrode assembly 22, whether to accommodate the at least one electrode assembly 22 wrapped with the insulating film 26 in the housing 211.

In this way, whether the insulating film 26 wraps the at least one electrode assembly 22 well can be determined based on the appearance of the at least one electrode assembly 22, thus determining whether to place the at least one electrode assembly 22 in the housing so as to finish the assembly of the battery cell 20.

The appearance of the at least one electrode assembly 22 may include the coating situations of the insulating film 26 of the at least one electrode assembly 22: whether the surface of the insulating film 26 is damaged, whether the insulating film 26 completely wraps a part that needs to be wrapped of the at least one electrode assembly 22, and whether the insulating film 26 is attached to the at least one electrode assembly 22, or the like.

In some embodiments, the determining, based on the appearance of the at least one electrode assembly 22, whether to accommodate the at least one electrode assembly 22 wrapped with the insulating film 26 in the housing 211 includes: under a condition that the appearance of the at least one electrode assembly 22 is normal, accommodating the at least one electrode assembly 22 wrapped with the insulating film 26 in the housing 211. This can ensure that the insulating film 26 wraps the at least one electrode assembly 22 well, thus ensuring isolation of the at least one electrode assembly 22 from the housing 211.

Optionally, the method 300 further includes: under a condition that the appearance of the at least one electrode assembly 22 is abnormal, dismantling the insulating film 26 on the at least one electrode assembly 22 or delivering the at least one electrode assembly 22 to a discharge port.

After the insulating film 26 is dismantled, a rework procedure can be performed. For example, the at least one electrode assembly 22 is sleeved with another insulating film 26, which is then heated to attach to the at least one electrode assembly 22.

If an abnormal appearance of the at least one electrode assembly 22 is detected again after the rework procedure, the at least one electrode assembly 22 can be reworked again or transported to the discharge port for subsequent centralized processing.

Optionally, after the at least one electrode assembly 22 wrapped with the insulating film 26 is accommodated in the housing 211, the method 300 further includes transferring the assembled battery cell 20 to an output port.

Optionally, the method 300 is executed by a control system, and the control system may be a controller on a production line for producing battery cells.

FIG. 13 is a schematic diagram of a device for preparing a battery cell according to an embodiment of this application. As shown in FIG. 13, the device 400 includes a providing module 410 and a mounting module 420.

The providing module 410 is configured to provide at least one electrode assembly 22 and an insulating film 26, where the insulating film 26 is sleeve-shaped and a material of the insulating film 26 is a hot shrinkable material.

The mounting module 420 is configured to sleeve the at least one electrode assembly 22 with the insulating film 26 and heat the insulating film 26, allowing the insulating film 26 to wrap the at least one electrode assembly 22.

The embodiments of this application provide a battery cell 20 including at least one electrode assembly 22, a housing 211, and an insulating film 26. The at least one electrode assembly 22 is accommodated in the housing 211, and the insulating film 26 is configured to wrap the at least one electrode assembly 22, so as to isolate the at least one electrode assembly 22 from the housing 211. This can achieve isolation between the at least one electrode assembly 22 and the housing 211. As the insulating film 26 is sleeve-shaped and the material of the insulating film 26 is the hot shrinkable material, the sleeve-shaped insulating film 26 can sleeve the at least one electrode assembly 22 and be heated to shrink, so as to wrap the at least one electrode assembly 22. The technical solutions in this application can alleviate the problem that an excessively small or large distance between the insulating film 26 and an end cover 212 causes a decrease in the pass rate of the battery cell 20 and can also alleviate the problem that poor hot melting causes a decrease of the pass rate of the battery cell 20. Therefore, the technical solutions of this application can improve the pass rate of the battery cell.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification, but includes all technical solutions falling within the scope of the claims.

## Claims

1. A battery cell (20), **characterized by** comprising:
at least one electrode assembly (22);
a housing (211), wherein the housing (211) is configured to accommodate at least one electrode assembly (22); and
an insulating film (26) configured to wrap the at least one electrode assembly (22), so as to isolate the at least one electrode assembly (22) from the housing (211), wherein the insulating film (26) is sleeve-shaped and a material of the insulating film (26) is a hot shrinkable material.

2. The battery cell (20) according to claim 1, **characterized in that** the insulating film (26) has a first opening (261), and the first opening (261) corresponds to an end of the at least one electrode assembly (22) provided with a tab (221).

3. The battery cell (20) according to claim 2, wherein the insulating film (26) is provided with a bottom supporting plate (263) on a first surface (262) opposite the first opening (261) on a side away from the at least one electrode assembly (22).

4. The battery cell (20) according to claim 3, **characterized in that** the bottom supporting plate (263) is adhered to the insulating film (26).

5. The battery cell (20) according to claim 3 or 4, **characterized in that** the insulating film (26) is configure to, after connected to the bottom supporting plate (263), wrap the at least one electrode assembly (22).

6. The battery cell (20) according to any one of claims 3 to 5, **characterized in that** a material of the bottom supporting plate (263) is an insulating material.

7. The battery cell (20) according to any one of claims 1 to 6, **characterized in that** a shape of the insulating film (26) is consistent with an overall shape of the at least one electrode assembly (22).

8. The battery cell (20) according to claim 7, **characterized in that** the insulating film (26) is attached to the at least one electrode assembly (22).

9. The battery cell (20) according to claim 8, **characterized in that** in at least one direction, a size of the insulating film (26) decreases by 1 mm-10 mm after hot shrinkage.

10. The battery cell (20) according to any one of claims 1 to 9, **characterized in that** a material of the insulating film (26) comprises at least one of polyethylene, polystyrene, polyvinyl chloride, polypropylene, polymethyl methacrylate, methyl phenyl silicone resin, and polyethylene terephthalate.

11. A battery (10), **characterized by** comprising the battery cell (20) according to any one of claims 1 to 10.

12. An electric device, **characterized by** comprising the battery (10) according to claim 11, wherein the battery (10) is configured to provide electric energy for the electric device.

13. A method (300) for preparing a battery cell (20), **characterized by** comprising:
providing (310) at least one electrode assembly (22);
providing (320) an insulating film (26), wherein the insulating film (26) is sleeve-shaped and a material of the insulating film (26) is a hot shrinkable material;
sleeving (330) the at least one electrode assembly (22) with the insulating film (26); and
heating (340) the insulating film (26), allowing the insulating film (26) to wrap the at least one electrode assembly (22).

14. The method (300) according to claim 13, **characterized in that** the insulating film (26) has a first opening (261), and the first opening (261) corresponds to an end of the at least one electrode assembly (22) provided with a tab (221).

15. The method (300) according to claim 14, **characterized in that** before the sleeving the at least one electrode assembly (22) with the insulating film (26), the method (300) further comprises:
providing a bottom supporting plate (263); and
disposing the bottom supporting plate (263) on a first surface (262) of the insulating film (26) opposite the first opening (261) on a side away from the at least one electrode assembly (22).

16. The method (300) according to claim 15, **characterized in that** after the heating (340) the insulating film (26), allowing the insulating film (26) to wrap the at least one electrode assembly (22), the method (300) further comprises:
identifying appearance of the at least one electrode assembly (22) wrapped with the insulating film (26); and
determining, based on the appearance of the at least one electrode assembly (22), whether to accommodate the at least one electrode assembly (22) wrapped with the insulating film (26) in the housing (211).

17. The method (300) according to claim 16, **characterized in that** the determining, based on the appearance of the at least one electrode assembly (22), whether to accommodate the at least one electrode assembly (22) wrapped with the insulating film (26) in the housing (211) comprises:
under a condition that the appearance of the at least one electrode assembly (22) is normal, accommodating the at least one electrode assembly (22) wrapped with the insulating film (26) in the housing (211).

18. A device (400) for preparing a battery cell (20), **characterized by** comprising:
a providing module (410) configured to provide at least one electrode assembly (22) and an insulating film (26), wherein the insulating film (26) is sleeve-shaped and a material of the insulating film (26) is a hot shrinkable material; and
a mounting module (420) configured to sleeve the at least one electrode assembly (22) with the insulating film (26) and heat the insulating film (26), allowing the insulating film (26) to wrap the at least one electrode assembly (22).
